(19) Europäisches Patentamt
European Patent Office
Office européen des brevets

(11) **EP 3 698 041 B1**

(12) **EUROPÄISCHE PATENTSCHRIFT**

(45) Veröffentlichungstag und Bekanntmachung des Hinweises auf die Patenterteilung:
**18.05.2022 Patentblatt 2022/20**

(21) Anmeldenummer: **18795370.8**

(22) Anmeldetag: **22.10.2018**

(51) Internationale Patentklassifikation (IPC):
***F03D 1/06*** (2006.01)

(52) Gemeinsame Patentklassifikation (CPC):
**F03D 1/0658;** F03D 1/0675; F05B 2240/302;
F05B 2240/311; F05B 2260/79; Y02E 10/72

(86) Internationale Anmeldenummer:
**PCT/EP2018/078857**

(87) Internationale Veröffentlichungsnummer:
**WO 2019/077160 (25.04.2019 Gazette 2019/17)**

(54) **ROTORBLATT UND ROTOR FÜR EINE WINDENERGIEANLAGE, MIT EINER LAGERLOSEN PITCHVERSTELLUNG UND WINDENERGIEANLAGE**

ROTOR BLADE AND ROTOR FOR A WIND TURBINE, HAVING BEARING-FREE PITCH ADJUSTMENT, AND WIND TURBINE

PALE DE ROTOR ET ROTOR POUR ÉOLIENNE, MUNI D'UN RÉGLAGE DU PAS SANS PALIER, ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2017 DE 102017124598**

(43) Veröffentlichungstag der Anmeldung:
**26.08.2020 Patentblatt 2020/35**

(73) Patentinhaber: **Wobben Properties GmbH**
**26607 Aurich (DE)**

(72) Erfinder: **ALTMIKUS, Andree**
**26605 Aurich (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
WO-A1-99/63218      DE-U1-202015 000 665
FR-A- 1 000 102       US-A- 4 083 651
US-A- 4 352 629       US-A1- 2009 317 253

**Beschreibung**

Die vorliegende Erfindung betrifft ein Rotorblatt sowie einen Rotor für eine Windenergieanlage mit einer Pitchwinkelverstellung für die Rotorblätter sowie eine Windenergieanlage, die mit einem erfindungsgemäßen Rotorblatt bzw. Rotor ausgerüstet ist.

Windenergieanlagen sind grundsätzlich im Stand der Technik bekannt und werden üblicherweise dazu verwendet, um elektrische Energie aus Wind zu erzeugen und in ein elektrisches Versorgungsnetz einzuspeisen. Der vorliegenden Erfindung liegt insbesondere eine so genannte Horizontalachsenwindenergieanlage mit wenigstens einem, insbesondere drei verstellbaren Rotorblättern zu Grunde. Die Rotorachse trägt eine Nabe, an der die Rotorblätter angeordnet sind. Um die Windenergieanlage an sich ändernde Windbedingungen anpassen zu können, ist der Anstellwinkel der Rotorblätter veränderbar. Insbesondere wird bei auffrischendem Wind und nach Erreichen der Nennleistung der Windenergieanlage der Anstellwinkel der Rotorblätter vergrößert, um trotz zunehmender Windgeschwindigkeit die Nenndrehzahl und Nennleistung der Windenergieanlage konstant zu halten. Bei immer weiter zunehmenden Windgeschwindigkeiten werden die Rotorblätter immer weiter in eine Richtung hin zur Fahnenstellung verstellt, bis ab einer Grenzgeschwindigkeit die Windenergieanlage vollständig abgeschaltet wird, um sie vor Beschädigung zu schützen.

Um die beschriebene Änderung des Anstellwinkels bzw. Pitchwinkels der Rotorblätter vornehmen zu können, ist an der Blattwurzel ein so genanntes Pitchlager vorgesehen, das die Änderung eines Pitchwinkels zulässt. Von einer Steuerung der Windenergieanlage angesteuert verändert ein Pitchantrieb erforderlichenfalls den Pitchwinkel des Rotorblattes. Über das Pitchlager werden alle auf das Rotorblatt wirkenden Kräfte in die Nabe eingeleitet. Dazu gehören unter anderem Biegemomente und Zentrifugalkräfte, die auf das Rotorblatt einwirken. Die Pitchlager sind daher sehr hohen Belastungen ausgesetzt und darüber hinaus sehr teure Bauteile. Gleichzeitig vertragen die Pitchlager nur eine begrenzte Anzahl von Überrollungen. Das ist insofern problematisch, weil im Interesse einer Minderung der Belastung auf die Windenergieanlage häufige Änderungen des Pitchwinkels wünschenswert wären. Zum Beispiel führt ein vertikaler Windgeschwindigkeitsgradient dazu, dass auf ein Rotorblatt in 12-Uhr-Stellung größere aerodynamische Kräfte wirken als auf ein Rotorblatt in 6-Uhr-Stellung. Gleiches gilt im Falle einer horizontalen Schräganströmung für die 9-Uhr- bzw. 3-Uhr-Stellung der Rotorblätter. Im Interesse einer gleichmäßigen Lastverteilung wäre es deshalb beispielsweise sinnvoll, den Pitchwinkel eines Rotorblattes während des Laufes so zu verändern, dass insbesondere in der 12-Uhr-Stellung ein anderer Pitchwinkel eingestellt ist als in der 6-Uhr-Stellung. Darüber hinaus sind insbesondere bei großen Rotoren die lasterzeugenden atmosphärischen Turbulenzen skalenmäßig kleiner als der Rotordurchmesser und höherfrequenter als die Drehzahl des Rotors. In diesen Fällen müsste eine effektive aktive Lastenminderung an einem Rotorblatt also mehrmals pro Umlauf des Rotors erfolgen. Man bezeichnet das auch als höherharmonische Einsteuerung des Pitchwinkels. Eine solche höherharmonische Einsteuerung des Pitchwinkels würde die Belastung für die Pitchlager erheblich vergrößern, denn sie würden mehrfach pro Rotorumlauf bewegt werden. Dadurch würde sich ihre Lebensdauer deutlich verkürzen. Schäden an den Pitchlagern können jedoch lange Ausfallzeiten und hohe Kosten verursachen.

Aus diesen Gründen unterbleibt bei den meisten Windenergieanlagen die an sich wünschenswerte, umlaufperiodische, höherharmonische oder aperiodische, beispielsweise entsprechend des stochastischen Böenaufkommens, Anpassung des Pitchwinkels, weil sich die Lebensdauer der Pitchlager zu stark vermindern würde. Erschwerend kommt hinzu, dass für eine umlaufperiodische oder höherharmonische Einsteuerung der Pitchwinkel herkömmliche Pitchantriebe relativ viel Energie verbrauchen würden.

Hiervon ausgehend ist es eine Aufgabe der vorliegenden Erfindung, ein Rotorblatt für Windenergieanlagen vorzuschlagen, das die genannten Probleme herkömmlicher Rotorblätter vermeidet oder doch zumindest verbessert.

US2009/317253A1 ist ein Beispiel für eine Windkraftanlage mit einem Pitchwinkel-Regulierungssystem ohne die Verwendung eines Pitchlagers.

Nach einem ersten Aspekt schlägt die vorliegende Erfindung ein Rotorblatt für eine Windenergieanlage vor, das einen nabennahen Abschnitt und einen daran angesetzten Außenabschnitt aufweist. Der nabennahe Abschnitt umfasst eine Verbindungskomponente mit einem Drillelement, dessen Enden relativ zueinander verdrehbar sind und jeweils eine zug- und drehfeste Verbindung am inneren Ende zur Nabe der Windenergieanlage und am äußeren Ende zum Außenabschnitt des Rotorblattes herstellt, wobei das Drillelement dazu eingerichtet ist, eine Drehung des Außenblattabschnittes um die Rotorblattlängsachse lagerlos zu ermöglichen.

Ein besonderer Vorteil des erfindungsgemäßen Rotorblattes ist, dass die auf das Rotorblatt einwirkenden Kräfte auf die Nabe der Windenergieanlage lagerfrei übertragen werden, d.h. das Rotorblatt ist nicht in einem Pitchlager gelagert wie es bei herkömmlichen Rotorblättern der Fall ist.

In einer vorteilhaften Weiterbildung umfasst das Drillelement ein Torsionselement. Das Torsionselement ermöglicht die relative Verdrehung der beiden Enden des Drillelementes, indem das Torsionselement selbst tordierbar ist.

Bei einem Ausführungsbeispiel weist das Torsionselement ein wölbkrafttorsionsfreies, insbesondere offenes Querschnittsprofil auf. Insbesondere kann das Torsionselement ein H-Profil, ein Doppel-H-Profil oder ein sternförmiges Profil aufweisen.

Mit Vorteil nimmt auf der Nabe der Windenergieanlage montierte Rotorblatt bei entspanntem Torsionselement eine 90° ± 10° Pitchlage ein. Diese spezielle Ausgestaltung des Rotorblattes hat den Vorteil, dass die Rotorblätter bei einer abgeschalteten Windenergieanlage im Wesentlichen eine Segelstellung einnehmen, so dass eine Beschädigung der Windenergieanlage bei aufkommendem Wind oder sogar bei Sturm so gut wie ausgeschlossen ist. Dies ist auch ein für die Sicherheit der Windenergieanlage relevanter Aspekt, weil keine Energiezufuhr notwendig ist, um die Windenergieanlage in diesen Zustand zu überführen.

In einer besonders vorteilhaften Weiterbildung ist das Torsionselement so dimensioniert, dass, wenn das auf der Nabe montierte Rotorblatt in den Wind gedreht ist, die in dem Torsionselement gespeicherte elastische Energie ausreicht, um das Rotorblatt zu einer Fahnenstellung hin zu verstellen und aus dem Wind zu drehen. Auf diese Weise wird sichergestellt, dass es möglich ist, beispielsweise bei einem Stromausfall die Windenergieanlage in einen sicheren Zustand zu bringen, ohne dass dafür netzunabhängige weitere Energiequellen vorgehalten werden müssten.

Unter materialtechnischen Aspekten hat es sich als günstig erwiesen, wenn das Torsionselement aus Metall und/oder einem Verbundwerkstoff hergestellt ist.

Bei einer alternativen Ausführungsform des erfindungsgemäßen Rotorblattes weist das Drillelement zwei Längsstreben auf, die gemäß dem Elle-Speiche-Prinzip gegeneinander verdrehbar sind. Auch mit dieser Anordnung wird ein wesentlicher Vorteil des erfindungsgemäßen Rotorblattes erreicht, nämlich dass die auf das Rotorblatt wirkenden Kräfte lagerfrei auf die Nabe der Windenergieanlage übertragen werden, wodurch alle Probleme in Bezug auf den Verschleiß von Pitchlagern eliminiert werden.

Ein für den Betrieb ebenso wichtiger Aspekt ist, dass das Drillelement eine 0° ± 10° Pitchlage zulässt, wenn das Rotorblatt auf einer Nabe der Windenergieanlage montiert ist. In dieser Position ist das Rotorblatt in der Lage, dem Wind die größtmögliche Menge an Energie zu entnehmen, was bis zum Erreichen der Nennwindgeschwindigkeit ein wichtiger Aspekt in Bezug auf den wirtschaftlichen Betrieb der Windenergieanlage ist.

Vorzugsweise umfasst die Verbindungskomponente weiter ein torsionssteifes Pitchrohr. Das nabenseitige Ende des Pitchrohres ist gegenüber dem nabenseitigen Ende des Drillelelementes um die Längsachse des Rotorblattes verdrehbar und das nabenferne Ende des Pitchrohres ist an dem nabenfernen Ende des Drillelementes drehfest angeordnet.

Somit ist das nabenseitige Ende des Pitchrohres gegenüber dem nabenseitigen Ende des Drillelelementes um die Längsachse des Rotorblattes verdrehbar, wohingegen das nabenferne Ende des Pitchrohres an dem nabenfernen Ende des Kupplungsteiles drehfest angeordnet ist. Der Pitchwinkel des so ausgebildeten Rotorblattes lässt sich mittels des Pitchrohres verändern, indem insbesondere der Außenabschnitt des Rotorblattes in die gewünschte Position gedreht wird. Dazu kann eine Steuerkraft beispielsweise in Form eines Drehmomentes um eine Achse des Pitchrohres an dem nabenseitigen Ende des Pitchrohres angreifen, die mittels des Pitchrohres an das nabenferne Ende des Drillelementes übertragen und dort zu einer Verdrehung des nabenfernen Ende des Drillelementes bezüglich dessen nabennahen Endes führt. Damit ist die lagerlose Pitchwinkelverstellung möglich. Es sind natürlich auch andere Möglichkeiten, eine Steuerkraft auf das nabenferne Ende des Drillelementes zu übertragen, möglich.

Vorzugsweise weist das Drillelement eine kleinere Torsionssteifigkeit auf, als das Pitchrohr. Durch diese Ausgestaltung wird sichergestellt, dass die Torsion bei dem Verstellen des Pitchwinkels des Rotorblattes im Wesentlichen in dem Drillelement stattfindet, während das Pitchrohr nur in einem vergleichsweise geringen Ausmaß tordiert wird. Entsprechend ist in diesem Rahmen unter dem Begriff torsionssteif eine relativ höhere Steifigkeit gegenüber Torsion zu verstehen, als die des Drillelementes, so dass ein auf das Pitchrohr angewandtes Drehmoment ohne eine signifikante Torsion des Pitchrohres zu einer Verdrillung des Drillelementes führt. Vorzugsweise ist das Pitchrohr mindestens doppelt so torsionssteif wie das Drillelement, besonders bevorzugt mindestens fünffach und insbesondere mindestens zehnfach so torsionssteif wie das Drillelement.

Zweckmäßigerweise ist ein Befestigungsabschnitt an dem nabenfernen Ende des Drillelementes mit dem Pitchrohr drehfest verbunden, während das Drillelementes im Übrigen in dem Pitchrohr verdrehbar gelagert ist. Mit dieser Ausgestaltung ist es möglich, die volle Länge des Drillelementes auszunutzen und es auf diese Weise so kurz wie möglich zu halten. Das bedeutet nämlich umgekehrt, dass der aerodynamisch wirksamere Außenabschnitt des Rotorblattes bei gegebener Gesamtlänge umso länger sein kann, was sich günstig auf die aerodynamische Leistung des Rotors auswirkt.

Zweckmäßigerweise und vorzugsweise hat das nabenseitige Ende des Pitchrohres einen kreisförmigen Querschnitt, der in manchen Ausgestaltungen eines Pitchantriebes vorteilhaft ist, insbesondere dann, wenn das nabenseitige Ende des Pitchrohres mit einem Zahnkranz versehen ist.

Im Gegensatz dazu ist es von Vorteil, wenn das nabenferne Ende des Pitchrohres einen ovalen Querschnitt aufweist, der an den Querschnitt des nabenseitigen Endes des Außenabschnittes angepasst ist. Auf diese Weise wird erreicht, dass an der Nahtstelle zwischen dem nabennahen Abschnitt und dem Außenabschnitt des Rotorblattes ein kontinuierlicher Übergang stattfindet, der aerodynamisch günstig ist.

Bei einer vorteilhaften Weiterbildung des Rotorblattes weist der Außenabschnitt eine einteilig oder mehrteilig ausgebildete Servoklappe auf. Die Servoklappe kann zusätzlich oder Alternativ zu dem Pitchrohr vorgesehen sein, um beispielsweise die Verdrillung des Drillelementes durch aerodynamische Kräfte zu steuern.

Zweckmäßigerweise kann in dem Außenabschnitt wenigstens ein Aktuator vorgesehen sein, mittels dessen eine aerodynamische Eigenschaft, insbesondere das Profil, wenigstens eines Teils des Außenblattes veränderbar ist. Die Veränderung des Profils des Außenblattes führt ebenso wie eine verstellbare Servoklappe dazu, dass ein aerodynamisches Moment erzeugt wird, um den Pitchwinkel des Rotorblattes und/oder den Anströmwinkel eines Rotorblattabschnittes, insbesondere der Blattspitze, zu verändern. Auch dieser Ansatz, um den Pitchwinkel zu verändern, ist im Vergleich zu herkömmlichen Pitchantrieben energiesparend.

Vorzugsweise ist der Außenabschnitt des Rotorblattes in ein Basisblatt und eine Blattspitze geteilt, die über ein weiteres Drillelement miteinander verbunden sind.

Mit Vorteil weist die Blattspitze eine einteilig oder mehrteilig ausgebildete Servoklappe auf, die dazu geeignet ist, aerodynamische Momente auf die Blattspitze auszuüben, die eine Verdrehung des weiteren Drillelementes und somit zu einer Veränderung des Anströmwinkels der Blattspitze führen. Auf diese Art wird das zur Veränderung des Anströmwinkels der Blattspitze erforderliche Moment auf energiesparende Weise erzeugt.

Zweckmäßigerweise kann in dem Außenblatt wenigstens ein Aktuator vorgesehen sein, mittels dessen das Profil des Außenblattes veränderbar ist. Die Veränderung des Profils des Außenblattes führt ebenso wie eine verstellbare Servoklappe dazu, dass ein aerodynamisches Moment erzeugt wird, um den Pitchwinkel des Rotorblattes und/oder den Anstellwinkel eines Rotorblattabschnittes, insbesondere der Blattspitze, zu verändern. Auch dieser Ansatz, um den Pitchwinkel zu verändern, ist im Vergleich zu herkömmlichen Pitchantrieben energiesparend.

Bei einem alternativen Ausführungsbeispiel eines erfindungsgemäßen Rotorblattes für eine Windenergieanlage, ist das Rotorblatt in einen nabennahen Abschnitt und einen Außenabschnitt geteilt, die mit einem tordierbaren Drillelement miteinander verbunden sind. Das Rotorblatt weist weiterhin wenigstens einen Aktuator auf, mittels dessen die aerodynamischen Eigenschaften des Außenabschnittes gezielt veränderbar sind. Eine Besonderheit dieses Rotorblattes ist, dass der nabennahe Abschnitt an der Blattwurzel konventionell über ein Pitchlager mit der Nabe verbunden ist, aber der Außenabschnitt des Rotorblattes lagerfrei verschwenkbar ist. In welchem Verhältnis die Gesamtlänge des Rotorblattes auf den nabennahen Abschnitt und den Außenabschnitt aufgeteilt ist, kann an unterschiedliche Standorte oder Typen von Windenergieanlagen angepasst werden.

In einer vorteilhaften Weiterbildung weist der Außenabschnitt eine einteilig oder mehrteilig ausgebildete Servoklappe auf. Mit Vorteil kann der Aktuator geeignet sein, um das aerodynamische Profil des Außenblattes zu verändern. Auch die Servoklappe kann von dem Aktuator betätigt werden. Sowohl die Änderung des aerodynamischen Profils des Außenabschnittes als auch das Verstellen der Servoklappe erzeugt ein aerodynamisches Moment, mittels dessen der Anstellwinkel des Außenabschnittes veränderbar ist.

Nach einem zweiten Aspekt der vorliegenden Erfindung wird ein aerodynamischer Rotor für eine Windenergieanlage vorgeschlagen, der wenigstens ein erfindungsgemäßes Rotorblatt aufweist.

Nach einem dritten Aspekt der vorliegenden Erfindung wird eine Windenergieanlage vorgeschlagen, die einen erfindungsgemäßen aerodynamischen Rotor umfasst.

Schließlich schlägt die vorliegende Erfindung nach einem vierten Aspekt ein Verfahren zum Steuern einer Windenergieanlage mit einem aerodynamischen Rotor vor, der wenigstens ein Rotorblatt aufweist, dessen Pitchwinkel veränderbar ist. Was Verfahren umfasst die folgenden Schritte:

- Einstellen eines Pitchwinkels des Rotorblattes,
- Verändern des ein aerodynamischen Profils in einem Bereich des Rotorblatt, und
- Verändern des Pitchwinkels in zumindest einem Abschnitt des Rotorblattes.

Das erfindungsgemäße Verfahren ermöglicht es, abschnittsweise entlang der Längsachse des Rotorblattes unterschiedliche Anstellwinkel einzustellen, um Belastungen durch unterschiedliche aerodynamische Verhältnisse entlang des Rotorblattes Rechnung zu tragen, insbesondere um diese Belastungen zu vermindern.

Bei einer vorteilhaften Weiterbildung des Verfahrens wird das aerodynamische Profil und/oder ein Pitchwinkel umlaufperiodisch, höher harmonisch oder mehrfach nichtharmonisch, das heißt aperiodisch, pro Umlauf des Rotors verändert. Dadurch können die Auswirkungen von atmosphärischen Turbulenzen auf die Rotorblätter und die gesamte Windenergieanlage vermindert werden. Nachdem keine die Lasten aufnehmenden Lager zur Anpassung des aerodynamischen Profils bzw. des Pitchwinkels notwendig sind, entfällt die Beanspruchung und damit frühzeitige Ermüdung derartiger Lager, die bei häufiger Belastung über die Lebensdauer zu erwarten wäre.

Die vorliegende Erfindung wird nachfolgend exemplarisch anhand von Ausführungsbeispielen unter Bezugnahme auf die begleitenden Figuren näher erläutert. Die Figuren sind schematisch und nicht maßstäblich gemeint. In den Figuren sind gleiche oder einander entsprechende Komponenten mit gleichen oder entsprechenden Bezugszeichen bezeichnet.

Figur 1              zeigt eine schematische Ansicht einer Windenergieanlage.
Figur 2A             zeigt ein erstes Ausführungsbeispiel eines erfindungsgemäßen Rotorblattes.

| Figur 2B | zeigt einen Querschnitt des Pitchrohres entlang einer ersten Schnittlinie. |
| Figur 2C | zeigt einen Querschnitt des Pitchrohres entlang einer zweiten Schnittlinie. |
| Figur 3A | zeigt einen Querschnitt eines Torsionselementes entlang der ersten Schnittlinie. |
| Figur 3B | zeigt einen Querschnitt eines Torsionselementes entlang der zweiten Schnittlinie. |
| Figur 3C | zeigt einen Querschnitt eines weiteren Torsionselementes entlang der ersten Schnittlinie. |
| Figur 3D | zeigt einen Querschnitt eines weiteren Torsionselementes entlang der zweiten Schnittlinie. |
| Figur 3E | zeigt einen Querschnitt noch eines weiteren Torsionselementes entlang der ersten Schnittlinie. |
| Figur 4A | zeigt das Torsionselement aus Figur 3E in einer Draufsicht. |
| Figur 4B | zeigt einen Längsschnitt durch das Torsionselement und das Pitchrohr. |
| Figur 4C | zeigt eine Draufsicht auf die Nabenanschlussstelle des Drillelementes. |
| Figur 5A | zeigt ein weiteres Ausführungsbeispiel des erfindungsgemäßen Rotorblattes. |
| Figur 5B | zeigt einen Abschnitt des Außenblattes aus Figur 5A in einer vergrößerten Ansicht. |
| Figur 6A | zeigt einen Querschnitt durch das Rotorblatt aus Figur 5B mit einem Torsionselement. |
| Figur 6B | zeigt einen Querschnitt durch das Rotorblatt aus Figur 5B mit einem alternativen Torsionselement. |
| Figur 6C | zeigt einen Querschnitt durch das Rotorblatt aus Figur 5B, wo das Torsions-element in dem Basisblatt endet. |
| Figur 6D | zeigt einen Querschnitt durch das Rotorblatt aus Figur 5B, wo das Torsions-element in der Blattspitze endet. |
| Figuren 7A bis 7C | veranschaulichen die Erzeugung eines aerodynamischen Momentes mit einer Servoklappe. |
| Figur 8A | zeigt ein weiteres Ausführungsbeispiel eines erfindungsgemäßen Rotorblattes. |
| Figur 8B | veranschaulicht schematisch und exemplarisch die axiale Verkürzung durch Torsion. |
| Figur 9 | zeigt ein Flussdiagramm zur Steuerung eines erfindungsgemäßen Rotorblattes. |

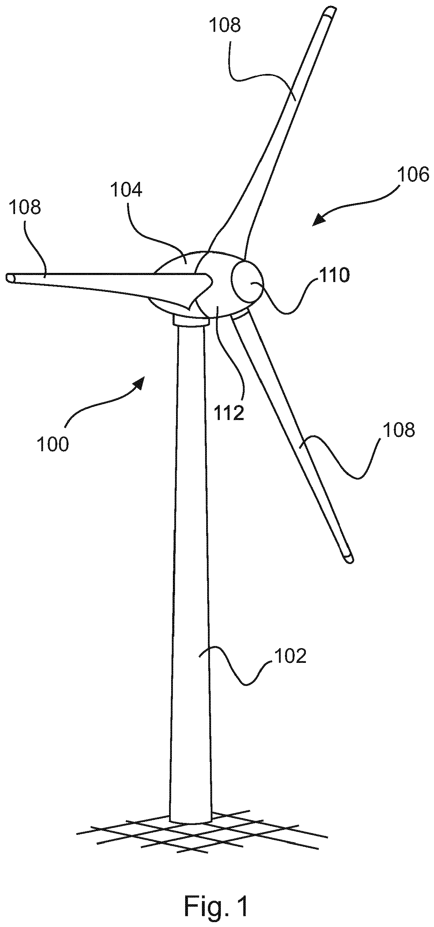

Figur 1 zeigt eine Windenergieanlage 100 mit einem Turm 102 und einer Gondel 104. An der Gondel 104 ist ein Rotor 106 mit drei Rotorblätter 108 und einem Spinner 110 angeordnet. Der Rotor 106 wird im Betrieb durch den Wind in eine Drehbewegung versetzt und treibt dadurch einen Generator in der Gondel 104 an. Die Rotorblätter 108 sind jeweils mit ihrer Blattwurzel an einer Nabe 112 um ihre Längsachse verdrehbar angeordnet. Eine Pitchregelung der Windenergieanlage 100 steuert eine Rotorblattverstellung so an, dass die Rotorblätter bei geringen Windgeschwindigkeiten bis zu einer Windgeschwindigkeit, bei der die Windenergieanlage ihre Nennleistung erreicht (Nennwindgeschwindigkeit), dem Wind möglichst viel Energie entnehmen. Bei Windgeschwindigkeiten oberhalb der Nennwindgeschwindigkeit werden bei weiter ansteigenden Windgeschwindigkeiten die Rotorblätter zunehmend aus dem Wind gedreht, das heißt der Pitchwinkel der Rotorblätter wird vergrößert, um die Windenergieanlage auf der Nennleistung und Nenndrehzahl zu halten. Bei einem bevorzugten Ausführungsbeispiel werden die Rotorblätter von der Rotorblattverstellung individuell verstellt. Grundsätzlich ist es aber auch möglich, dass für alle drei Rotorblätter 108 stets derselbe Pitchwinkel eingestellt wird.

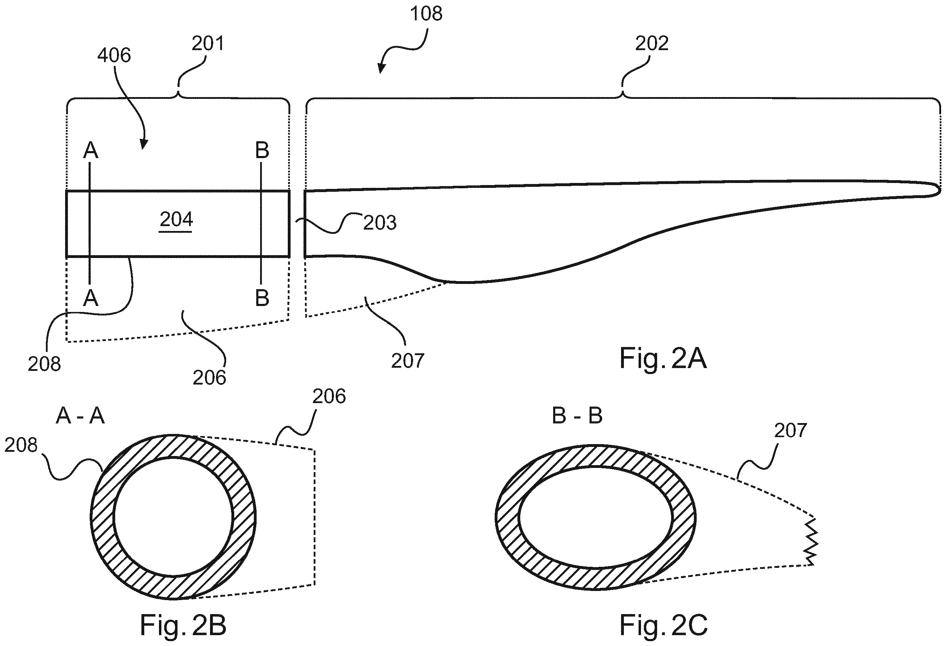

In Figur 2A ist ein erstes Ausführungsbeispiel eines erfindungsgemäßen Rotorblattes 108 schematisch dargestellt. Das Rotorblatt 108 gliedert sich in einen nabennahen Abschnitt 201 und einen Außenabschnitt 202, die im Interesse einer besseren Darstellung mit einem kleinen Abstand 203 gezeigt sind, der in Wirklichkeit natürlich nicht vorhanden ist. Der nabennahe Abschnitt 201 weist eine Verbindungskomponente 406 mit einem Drillelement 204 auf, das eine zugfeste und biegesteife mechanische Verbindung zwischen der Nabe 112 der Windenergieanlage 100 auf der einen Seite und dem Außenabschnitt 202 des Rotorblattes auf der anderen Seite herstellt. Wenigstens der Außenabschnitt 202 bildet ein aerodynamisches Profil. Ungeachtet dessen kann auch der nabennahe Abschnitt 201 ebenfalls eine aerodynamische Wirkung entfalten, wenn auch beispielsweise in geringerem Umfang als der Außenabschnitt 202. Es sollte beachtet werden, dass das Drillelement 204 nicht direkt in Verbindung mit der Nabe 112 steht, sondern auch weitere, zwischengelagerte Elemente zwischen dem Drillelement 204 und der Nabe 112 vorgesehen sein können.

Neben dem Drillelement 204 weist die Verbindungskomponente 406 in diesem Beispiel ein Pitchrohr 208 auf, das im Wesentlichen koaxial mit dem Drillelement 204 um das Drillelement 204 herum angeordnet ist. Das Pitchrohr 208 ist an seinem nabenfernen Ende derart mit dem Drillelement 204 gekoppelt, dass auf das Pitchrohr 208 angewandte Drehmomente auf das Drillelement 204 übertragen werden. An seinem nabennahen Ende ist das Pitchrohr 208 nicht an das Drillelement 204 gekoppelt und kann sich relativ dazu verdrehen. Insbesondere wird zum Verstellen des Pitchwinkels des Rotorblattes 108 das Pitchrohr 208 an seinem nabenseitigen Ende gegenüber der Nabe 112 verdreht.

In diesem Beispiel überträgt das Drillelement 204 die von den Rotorblättern 108 erzeugten aerodynamischen Momente, insbesondere ein Drehmoment um die Rotorachse und Schlagbiegemomente in der Rotorebene, direkt auf die Nabe 112 der Windenergieanlage 100. Zur Verbesserung des aerodynamischen Verhaltens des Rotorblattes 108 können an dem nabennahen Abschnitt 201, insbesondere an dem Pitchrohr 208, sowie an dem Außenabschnitt 202 jeweils ein Hinterkantenkasten 206 bzw. 207 oder sonstige aerodynamische Anbauteile angeordnet sein.

Figur 2B zeigt den Querschnitt des Pitchrohres 208 entlang der Schnittlinie A-A aus Figur 2A. Wie ersichtlich ist, hat das Pitchrohr 208 in der Nähe der Rotorblattwurzel einen runden Querschnitt. Der Hinterkantenkasten 206 ist mit einer gestrichelten Linie dargestellt. Das Drillelement 204, das innerhalb des Pitchrohres 208 angeordnet ist und verschiedene Formen annehmen kann, ist zur Vereinfachung der Darstellung nicht gezeigt.

Figur 2C zeigt den Querschnitt des Pitchrohres 208 entlang der Schnittlinie B-B aus Figur 2A. An dieser Stelle hat das Pitchrohr 208 einen ovalen Querschnitt, der an den Querschnitt des Außenabschnittes 202 des Rotorblattes 108 angepasst ist. Dadurch wird ein kontinuierlicher Übergang an der Nahtstelle zwischen dem nabennahen Abschnitt 201 und dem Außenabschnitt 202 erreicht. Der Hinterkantenkasten 207 ist wieder mit einer gestrichelten Linie dargestellt. Es sollte beachtet werden, dass der Hinterkantenkasten 206 bzw. 207 natürlich nicht fest mit der Nabe 112 verbunden ist, da bei einer Veränderung des Pitchwinkels des Rotorblattes 108 das gesamte Rotorblatt 108, zumindest der gesamte Außenabschnitt 202 zuzüglich des Pitchrohres 208 der Pitchverstellung unterliegen.

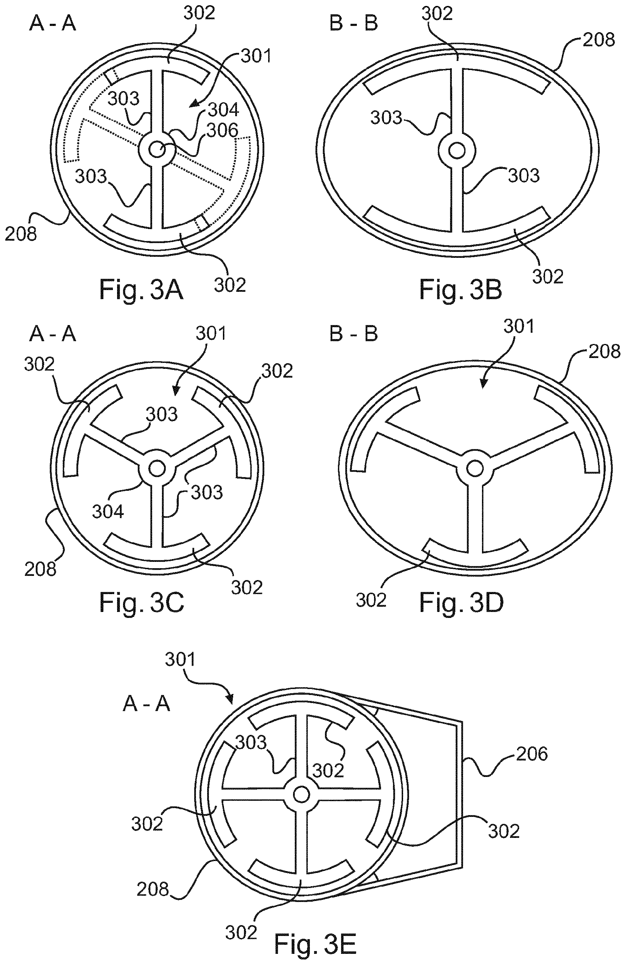

In einem bevorzugten Ausführungsbeispiel weist das Drillelement 204 ein torsionsweiches und biegesteifes Torsionselement 301 (Figur 3A) auf. Das nabennahe Ende des Torsionselementes 301 ist mit der Nabe 112 und das nabenferne Ende des Torsionselementes ist mit dem Außenabschnitt 202 des Rotorblattes 108 jeweils zug- und drehfest verbunden.

Figur 3A zeigt einen Querschnitt des Torsionselementes 301 entlang der Schnittlinie A-A in Figur 2A. Das Torsionselement 301 hat die Gestalt eines Doppel-T, bei dem zwei außen liegende Schenkel 302 durch einen gemeinsamen Steg 303 verbunden sind. In der Mitte des Steges 303 liegt eine ringförmige Ausformung 304 mit einer Öffnung 306 zur Vereinfachung der Fertigung, insbesondere in Fällen, in denen mehrere Schenkel 302 verwendet werden. Im Bereich der Schnittlinie A-A hat das Torsionselement 301 eine kreisförmige Außenkontur. Wenn das Torsionselement 301 im Betrieb tordiert wird, dann verschiebt sich die Position der Schenkel 306 in Längsrichtung des Torsionselementes entlang einer Schraubenlinie. Zur Veranschaulichung ist in Figur 3A zusätzlich die Position der Schenkel 302 in gepichter Position relativ zum Pitchrohr 208 (Figur 2A) gestrichelt dargestellt. Diese Darstellung ist insofern irreführend, als sich eigentlich im Schnitt A-A das Pitchroh 208 relativ zu den Schenkeln 306 verdreht, da dort das Torsionselement 301 fest mit der Nabe 112 verbunden ist.

Figur 3B zeigt einen Querschnitt des Torsionselementes 301 entlang der Schnittlinie B-B in Figur 2A. Eine Relativbewegung zwischen Pitchrohr 208 und Torsionselement 301 findet hier natürlich nicht mehr statt, weil am nabenfernen Ende des Drillelementes beide Komponenten, d.h. Pitchrohr und Torsionselement, fest miteinander verbunden sind. Im Bereich der Schnittlinie B-B folgt das Torsionselement 301 im Wesentlichen einer ovalen Außenkontur und ist bereits an die Außenkontur des Außenabschnittes bzw. Außenblattes 202 im Bereich des Blattanschlusses angepasst, der die Nahtstelle zwischen Außenblatt 202 und nabennahen Abschnitt 201 bildet. Durch die Geometrie des Torsionselementes 301 und des Pitchrohres 208 in diesem Bereich entsteht gewissermaßen eine drehfeste formschlüssige Verbindung zwischen beiden. Es sollte beachtet werden, dass natürlich auch andere drehfeste Verbindungen, die nicht notwendigerweise auf einem Formschluss beruhen, zwischen den nabenfernen Abschnitten des Drillelementes 204, insbesondere des Torsionselementes 301, und dem Pitchrohr vorstellbar sind.

Figur 3C zeigt einen Querschnitt eines anderen Ausführungsbeispiels des Torsionselementes 301 entlang der Schnittlinie A-A aus Figur 2A. Das Torsionselement 301 weist drei Schenkel 302 auf, die mit Stegen 303 mit einer gemeinsamen Nabe 304 verbunden sind.

Figur 3D Zeigt entsprechend zu Figur 3B einen Querschnitt des Torsionselementes 301 aus Figur 3C entlang der Schnittlinie B-B. Die ovale Außenkontur des Torsionselementes ist wieder an die Außenkontur des Außenblattes an der Blattanschlussstelle angepasst.

Schließlich ist in Figur 3E noch ein weiteres Ausführungsbeispiel des Torsionselementes 301 im Querschnitt entlang der Schnittlinie A-A gezeigt. Das Torsionselement 301 in Figur 3E weist vier Schenkel 302 auf. An das Pitchrohr 208, welches das Torsionselement 301 umschließt, ist der Hinterkantenkasten 206 angesetzt, insbesondere an dem Pitchrohr 208 angebracht. Bei dem Hinterkantenkasten 206 handelt es sich wie bereits angedeutet um ein Beispiel eines aerodynamischen Anbauteils, wobei beliebig viele andere Anbauteile alternativ oder zusätzlich anbringbar sind.

In den Figuren 3A bis 3E sind beispielhaft drei unterschiedliche Ausgestaltungen des Torsionselementes 301 gezeigt. Für den Fachmann ist jedoch klar, dass auch zahlreiche andere Profile für das Torsionselement 301 infrage kommen, beispielsweise ein H-Profil, ein Doppel-H-Profil oder ein sternförmiges Profil. Wesentlich ist allein, dass es sich vorzugsweise um wölbkrafttorsionsfreie offene, und somit prinzipbedingt um torsionsweiche, Profile handelt.

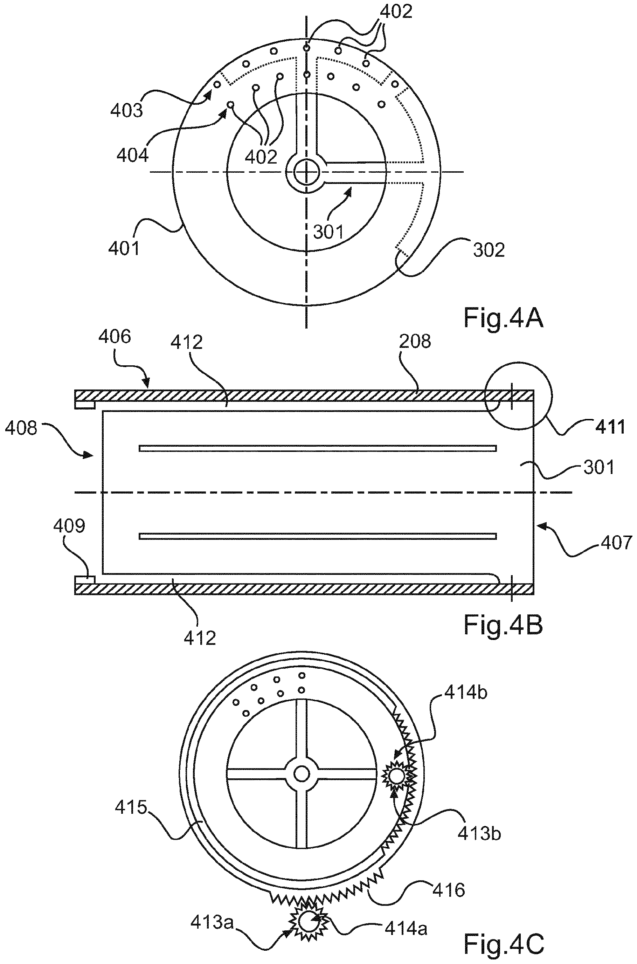

In Figur 4A ist das Torsionselement 301 aus Figur 3E gezeigt in einer Draufsicht von der Nabe her. Auf dem Torsionselement 301 sitzt eine Kreisringscheibe 401, die eine Vielzahl von Schraubenlöchern 402 aufweist, die in einem Außen- und Innenkranz 403, 404 angeordnet sind. Die Kreisringscheibe 401wird mit nicht dargestellten Schrauben auf den Stirnseiten der Schenkel 302 des Torsionselementes 301 fest geschraubt. Auf diese Weise bildet die Kreisringscheibe 401 einen Montageflansch, mit dem das Torsionselement 301 an der Nabe mit Schrauben montiert wird, die durch die Schraubenlöcher 402, die auf dem Innenkranz angeordnet sind, gesteckt sind. Die Kreisringscheibe 401 überträgt sämtliche Blattlasten auf die Nabe der Windenergieanlage.

Es sollte beachtet werden, dass die Kreisringscheibe 401 einen Spezialfall einer Ausgestaltung eines Montageflansches darstellt, bei dem die Anwendung des Torsionselementes 301 an die Nabe durch eine kreisförmige Anbindung erfolgt. Der Übergang von dem Torsionselement 301, das vorzugsweise ein offenes, wölbkraftfreies Profil aufweist, zur Anbindung an der Nabe ist gleichsam auch mit anderen Ausgestaltungen des Flansches, die nicht kreisförmig sind, möglich. Ebenso ist natürlich auch die Montage mit Schrauben nur eine beispielhafte Anbringung des Torsionselementes 301 an der Nabe und andere Befestigungsmöglichkeiten sind vorstellbar. Obwohl natürlich nicht kreisförmige Ausgestaltungen des Pitchrohres 208 im Bereich der Nabe ebenfalls vorstellbar sind, ist dieses zur einfacheren Ansteuerung im Bereich der Nabe allerdings bevorzugt kreisförmig ausgestaltet.

In Figur 4B ist ein Längsschnitt durch das Torsionselement 301 und das Pitchrohr 208 gezeigt, die gemeinsam ein Drillelement 406 bilden. Das in Figur 4B rechts liegende Ende des Drillelementes 406 bildet eine Blattanschlussstelle 407 für das Außenblatt 202, während das gegenüberliegende Ende eine Nabenanschlussstelle 408 bildet, die an der Nabe der Windenergieanlage befestigt wird. Auf der Seite der Nabenanschlussstelle 408 ist das Pitchrohr 208 mit einem Innenzahnkranz 409 versehen. An seinem gegenüberliegenden Ende ist das Pitchrohr 208 in einem Verbindungsbereich 411 drehfest mit dem Torsionselement 301 verbunden. Diese Verbindung sichert und verstärkt die zwischen dem Torsionselement 301 und dem Pitchrohr 208 bestehende formschlüssige Verbindung, beispielsweise auch dadurch, dass sich Torsionselement und Pitchrohr nicht so verformen, dass der Formschluss zwischen beiden verloren geht. Das Pitchrohr 208 ist wesentlich torsionssteifer als das Torsionselement 301, was für die weiter unten erläuterte Funktionsweise des Drillelementes 406 von erheblicher Bedeutung ist.

Bei einem anderen Ausführungsbeispiel ist ein Außenzahnkranz 416 (Figur 4C) anstelle des Innenzahnkranzes 409 oder zusätzlich zu dem Innenzahnkranz vorgesehen. Ein Spalt 412 zwischen dem Torsionselement 301 und dem Pitchrohr 208 ermöglicht es, dass sich das Pitchrohr 208 gegenüber dem Torsionselement 301 verdrehen kann unter Ausnahme des Bereiches 411. Dadurch ist sichergestellt, dass das Torsionselement nahezu auf seiner gesamten Länge tordiert wird.

In Figur 4C ist eine Draufsicht auf die Nabenanschlussstelle des Drillelementes 406 mit weiteren Einzelheiten dargestellt. Insbesondere sind zwei Pitchantriebe 413a, 413b gezeigt, die jeweils mit einem Ritzel 414a, 414b mit dem Innenzahnkranz 409 bzw. dem Außenzahnkranz 416 in Eingriff sind. Bei den Pitchantrieben handelt es sich um Elektromotoren, die von der Pitchregelung der Windenergieanlage angesteuert werden. Abgesehen von dem Verbindungsbereich 411 ist das Pitchrohr 208 drehbar auf dem Torsionselement 301 gelagert. Zu diesem Zweck ist zwischen dem Torsionselement 301 und dem Pitchrohr 208 ein Gleitlager 415 vorgesehen, das in Figur 4C schematisch angedeutet ist.

Anders ausgedrückt, das Gleitlager 415 ist vorgesehen, um die unvermeidliche Relativbewegung zwischen dem losen Ende des Pitchrohres 208 und dem Torsionselement 301 bzw. der Nabe zu ermöglichen, so dass die in Figur 4C gezeigte Zahnkranzlösung, die sehr eng toleriert werden muss, ermöglicht wird.

Auch wenn in Figur 4C die Pitchantriebe 413a, 413b jeweils als Zahnkranzlösungen mit Ritzel und Zahnkranz gezeigt sind, ist in anderen Ausführungen auch eine andere Kinematik zum Pitchen des Pitchrohres 208 vorstellbar. Beispielsweise können alternativ oder zusätzlich zu Zahnkranzlösungen hydraulisch angetriebene Kinematiken, beispielsweise Stabkinematiken, eingesetzt werden. Entscheidend ist, dass die Pitchantriebe eine relative Verdrehung des losen Endes des Pitchrohres 208 gegenüber dem Torsionselement 301 ermöglicht.

Bei anderen Ausführungsbeispielen kann auch nur ein einziger Pitchantrieb für jedes Rotorblatt vorgesehen sein oder es sind mehr als zwei Pitchantriebe für jedes Rotorblatt vorgesehen, insbesondere vier Pitchantriebe. Bei weiteren Ausführungsbeispielen umfasst der Pitchantrieb einen linearen Hydraulikzylinder, der über einen entsprechenden Hebelmechanismus ein Drehmoment auf das Pitchrohr ausübt. Gleichermaßen sind auch Antriebe mittels Zahnriemen oder Ketten denkbar. Welche Variante der Pitchantriebe zum Einsatz kommt hat jedoch keinen Einfluss auf die grundsätzliche Funktionsweise der vorliegenden Erfindung.

Anhand der Figuren 4B und 4C lässt sich das Zusammenwirken der Pitchantriebe 413a, 413b mit dem Pitchrohr 208 gut erläutern. Der Einfachheit halber wird im Folgenden stets nur von einem Rotorblatt gesprochen. Die beschriebenen Abläufe und Effekte gelten jedoch selbstverständlich für alle Rotorblätter der Windenergieanlage.

Im Ruhezustand der Windenergieanlage ist das Torsionselement 301 des Drillelementes 406 entspannt und das Rotorblatt nimmt eine Segelstellung (Fahnenstellung) ein. Zum Anfahren der Windenergieanlage gibt die Pitchregelung einen Befehl an die Pitchantriebe 413a, 413b ab, um das Rotorblatt 108 in den Wind zu drehen. Im Falle des in Figur 4C dargestellten Ausführungsbeispiels drehen die Pitchantriebe 413a, 413b das Pitchrohr 208. Zum einen hat das die Folge, dass das Rotorblatt in den Wind gedreht wird und gleichzeitig wird das Torsionselement 301 tordiert, denn an der Nabenanschlussstelle 407 ist das Torsionselement 301 fest mit der Nabe 112 verbunden, während sich dessen gegenüberliegendes anderes Ende an der Blattanschlussstelle gemeinsam mit dem Pitchrohr 208 verdreht. Im Wesentlichen wird bei diesem Vorgang nur das Torsionselement 301 tordiert, weil das Pitchrohr 208 wesentlich torsionssteifer als das Torsionselement 301 ist. Wenn das Rotorblatt den von der Pitchregelung vorgegebenen Pitchwinkel erreicht hat, wird es in dieser Position gehalten.

Das geschieht beispielsweise mit einer Bremse, die auf das Pitchrohr 208 wirkt, oder im Falle eines hydraulischen Antriebes durch einen Hydraulikzylinder, der seine momentane Stellung beibehält. In dieser Betriebsstellung des Rotorblattes ist in dem Torsionselement 301 elastische Energie gespeichert. Die gesamte Pitchregelung des Rotorblattes ist dabei so ausgelegt, dass bei einem Stromausfall die in dem Torsionselement 301 gespeicherte elastische Energie ausreicht, um das Rotorblatt in die Segelstellung zurückzudrehen. Insbesondere löst sich bei einem Stromausfall die Bremse, die das Rotorblatt an einem bestimmten Pitchwinkel festhält. Im Falle eines hydraulischen Antriebes öffnet sich ein Ventil, so dass der Hydraulikzylinder verschiebbar ist und das Rotorblatt in eine Segelstellung zurückkehrt. Dieses Merkmal, nämlich das das Torsionselement 301 selbst Energie speichert, ist für den sicheren Betrieb der Windenergieanlage vorteilhaft, weil auch ohne Zufuhr von externer Energie und ohne das Vorhandensein einer unabhängigen autonomen Energieversorgung die Windenergieanlage immer in einen sicheren Zustand zurückkehren kann.

Ein weiterer Vorteil des erfindungsgemäßen Rotorblattes ist, dass alle auf das Rotorblatt einwirkenden aerodynamischen Kräfte ohne Lager auf die Nabe übertragen werden. Insbesondere sind bei dem erfindungsgemäßen Rotorblatt Pitchlager eliminiert, die durch häufiges Verstellen des Pitchwinkels Verschleiß unterworfen sind. Damit ist ein Hinderungsgrund für eine umlaufperiodische oder höherharmonische oder stochastische/nicht harmonische Pitchwinkelverstellung nicht mehr vorhanden. Durch das häufige Verstellen des Pitchwinkels sind die Pitchantriebe zwar auch höherem Verschleiß ausgesetzt, aber das ist weniger problematisch als bei herkömmlichen Pitchlagern, weil die Pitchantriebe nicht so großen Lasten ausgesetzt sind wie herkömmliche Pitchlager.

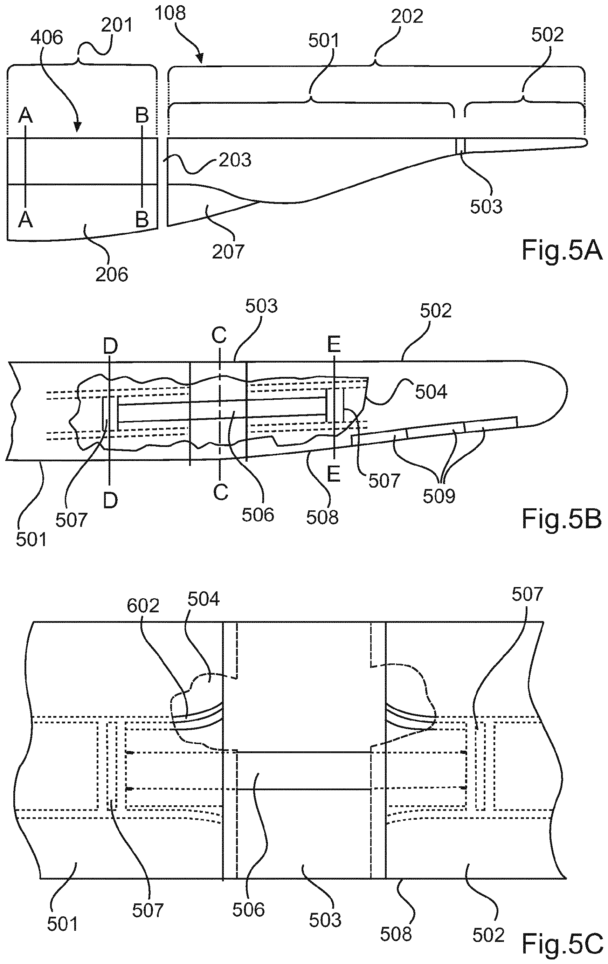

In Figur 5A ist ein weiteres Ausführungsbeispiel des erfindungsgemäßen Rotorblattes dargestellt, das sich von dem Rotorblatt aus Figur 2 darin unterscheidet, dass das Außenblatt 202 in ein Basisblatt 501 und eine Blattspitze 502 gegliedert ist, die mittels einer weiteren Verbindungskomponente 503 miteinander verbunden sind.

Figur 5B zeigt einen Abschnitt des Außenblattes 202 aus Figur 5A in einer vergrößerten Ansicht. Die Verbindungskomponente 503 ist mit einer Außenhaut versehen, die eine torsionsweiche Schale bildet. Ein aufgebrochener Bereich 504 gibt den Blick in das Innere des Rotorblattes auf ein als Torsionselement ausgestaltetes Drillelement 506 frei, dessen Enden in Halterungen 507 auf der einen Seite in dem Basisblatt 501 und auf der anderen Seite in der Blattspitze 502 dreh- und zugfest gehalten ist. An einer Hinterkante 508 der Blattspitze 502 ist eine dreiteilige Servoklappe 509 angeordnet. Die Funktionsweise der Servoklappe 509 wird im Folgenden noch genauer erläutert. An dieser Stelle wird nur festgehalten, dass in anderen Ausführungsbeispielen des erfindungsgemäßen Rotorblattes die Servoklappe 509 sowohl in weniger als auch in mehr als drei Teile unterteilt sein kann. Mehrteilige Servoklappen bieten die Option, die einzelnen Teilklappen gemeinsam oder auch unabhängig voneinander zu verstellen. Insofern bieten mehrteilige Servoklappen mehr Möglichkeiten der Steuerung als eine einzige entsprechend größere Servoklappe. Darüber hinaus halten segmentierte Klappen den in der Hinterkante des Blattes auftretenden hohen Schwenkdehnungen besser stand. Zusätzlich oder alternativ zu Servoklappen können natürlich auch andere bekannte aerodynamische Anbau- und/oder Steuerteile zum Einsatz kommen.

Figur 5C zeigt die Verbindungskomponente 503 in größerer Einzelheit. Ein aufgebrochener Bereich 504 erstreckt sich sowohl in den Bereich des Basisblattes 501 als auch in den Bereich der Blattspitze 502, um den Verlauf der Holme bzw. Gurte 602 zu verdeutlichen. Die Holme bzw. Gurte 602 stabilisieren das aerodynamische Profil des Basisblattes 501 und der Blattspitze 502. Über den Bereich der Verbindungskomponente 503 sind die Gurte 602 nicht miteinander verbunden. Anders ausgedrückt eignen sich die Gurte 602 nicht, das Profil zwischen dem Basisblatt 501 und der Blattspitze 502 zu stabilisieren. Als stabile Verbindung ist vielmehr ausschließlich das als Torsionselement ausgestaltete Drillelement 506 zwischen Basisblatt 501 und Blattspitze 502 vorgesehen. Durch ein auf das Drillelement 506 Wirken des Drehmoments kann somit das Profil der Blattspitze 502 gegen das Profil des Basisblattes 501 verdreht werden. Natürlich können auch im Bereich der Verbindungskomponente 503 Holme oder Gurte vorgesehen sein, die vorzugsweise aber entweder eine Flexibilität zulassen oder zumindest nicht in lastübertragener Verbindung mit dem Basisblatt 501 und der Blattspitze 502 stehen.

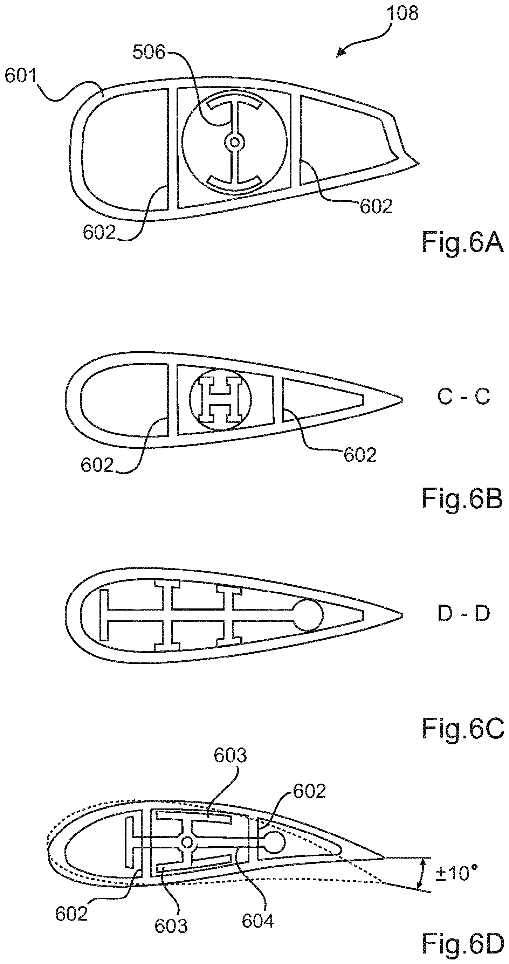

Figur 6A zeigt einen Querschnitt durch das Rotorblatt 108 aus Figur 5B entlang einer Schnittlinie parallel zu C-C zwischen den Halterungen 507, beispielsweise im Bereich der Verbindungskomponente 503. Eine Außenhaut 601 bildet ein aerodynamisches Profil des Rotorblattes 108, dem in Längsrichtung verlaufende Holme oder Gurte 602 Stabilität verleihen. Ungefähr im Zentrum des Rotorblattprofils ist das Drillelement 506 angeordnet, das bei dem in Figur 6A gezeigten Ausführungsbeispiel eine Doppel-T Struktur aufweist. Das Rotorblattprofil ist insbesondere im Bereich der Verbindungskomponente 503 schubweich ausgebildet, so dass das aerodynamische Profil der Blattspitze über den Bereich der Verbindungskomponente 503 in das Profil des Basisblattes 501 glatt übergehen kann, auch wenn das Drillelement 506 verdrillt ist.

Es sollte beachtet werden, dass vorzugsweise im Bereich der Verbindungskomponente 503 die Holme bzw. Gurte 602, die in den weiteren Blattbereichen zur Stabilität vorgesehen sind, weggelassen sind. Damit wird die Flexibilität des Rotorblattes in diesem Bereich ermöglicht.

Figur 6B zeigt ein alternatives Ausführungsbeispiel, das sich durch eine andere Struktur des Drillelementes 506 von dem in Figur 6A gezeigten Ausführungsbeispiel unterscheidet. Grundsätzlich sind auch weitere Querschnittsprofile für das Drillelement 506 beispielsweise auch die Profile die in den Figuren 3C und 3E mit Bezug auf das Torsionselement 301 gezeigt sind, möglich. Auch hier gilt, dass eine große Gestaltungsfreiheit in Bezug auf das Profil des als Torsionselement ausgestalteten Drillelementes 506 besteht, solange es sich um ein offenes wölbkrafttorsionsfreies Profil handelt. Auch andere Formen von Drillelementen 506, beispielsweise in Form des bereits angedeuteten Elle-Speiche-Prinzips sind einsetzbar.

Figur 6C zeigt einen Querschnitt durch das Rotorblatt 108 aus Figur 5B entlang der Schnittlinie D-D, die in einem Bereich liegt, wo das Drillelement 506 endet. Figur 6C zeigt somit einen Endabschnitt des Drillelementes 506, der so ausgestaltet ist, dass das Drillelement 506 drehfest in dem Rotorblatt, insbesondere dem Basisblatt 501, verankert ist.

Figur 6D zeigt einen Querschnitt durch das Rotorblatt 108 aus Figur 5B entlang der Schnittlinie E-E. In diesem Fall ist ein Querschnitt durch das gegenüberliegende Ende des Drillelementes 506 gezeigt, dass mit Kontaktflächen 603 an der Innenseite des Rotorblattes anliegt und außerdem in den Gurten 602 verankert ist. Mit einer gestrichelten Linie ist ein möglicher Schwenkbereich des Rotorblattprofils von ±10° eingezeichnet. Eine Veränderung des Rotorblattprofils erfordert, dass ein Torsionsmoment auf die Blattspitze 502 einwirkt, denn ansonsten hält das Drillelement 506 die Profilsehne der Blattspitze 502 parallel zur Profilsehne des Basisblattes 501. Bei dem in Figur 5A gezeigten Ausführungsbeispiel wird das für die Verschwenkung der Blattspitze 502 erforderliche Drehmoment mit der Servoklappe 509 erzeugt, wie im Folgenden erläutert wird.

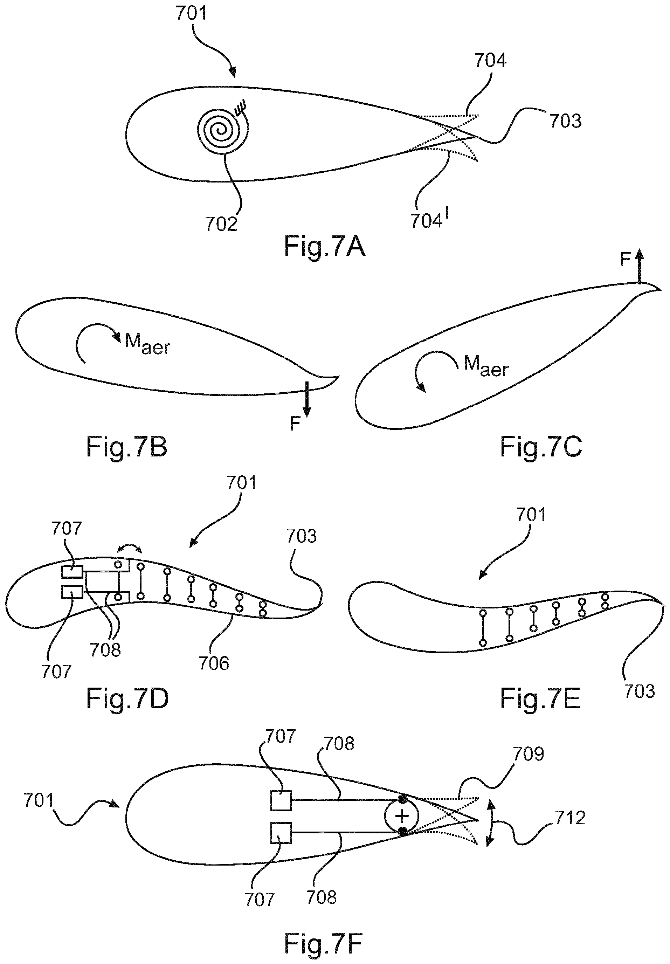

Die Figuren 7A bis 7C veranschaulichen die Erzeugung eines aerodynamischen Momentes mit einer Servoklappe. In Figur 7A ist ein aerodynamisches Profil 701 dargestellt, in dessen Inneren eine Drehfeder 702 angeordnet ist.

Je nach Auslenkung der Sensorklappe in verschiedenen Positionen 704 bzw 704' wirkt auf die Drehfeder 702 ein Drehmoment in unterschiedlichen Richtungen. Dies ist in Figuren 7B und 7C für eine jeweils unterschiedliche Auslenkung der Klappe gezeigt. Die Drehfeder 702 symbolisiert das Torsionselement, das als Drehzentrum aufgefasst werden kann. Aufgrund des langen Abstandes zwischen Servoklappe und Drehzentrum, das heißt Drehfeder 702, erzeugt eine vergleichsweise geringe aerodynamische Kraft F ein großes aerodynamisches Drillmoment $M_{aer}$ im Bereich der Drehfeder 702. Das Prinzip der Servoklappe bedeutet somit, dass eine relativ geringe Auslenkung im Bereich der Hinterkante aufgrund des langen Hebelarmes zu einem großen Drehmoment führen kann.

In den Figuren 7D und 7F ist eine konkrete Umsetzung dieses Prinzips veranschaulicht, wie es beispielsweise auch in der DE 10 2007 013 289 A1 offenbart ist. Das Profil 701 ist schubweich ausgebildet und von einer zug- und drucksteifen Außenhaut 706 umgeben. Im Inneren des Profils sind zwei Aktuatoren 707 angeordnet, die jeweils über eine zugeordnete Schubstange 708 die Saug- bzw. die Druckseite des Profils 701 verlängern bzw. verkürzen. In Figur 7D ist eine Verkürzung auf der Saugseite und eine Verlängerung auf der Druckseite des Profils gezeigt, wodurch sich die Hinterkante 703 des Profils in Figur 7D nach oben richtet. Figur 7F zeigt die umgekehrte Situation, nämlich eine Verlängerung des Profils auf der Saugseite und eine entsprechende Verkürzung auf der Druckseite, worauf sich die Hinterkante 703 des Profils in Figur 7E nach unten richtet.

Grundsätzlich ist die vorliegende Erfindung unabhängig davon, wie ein aerodynamische Moment erzeugt wird. Es ist daher auch möglich, das aerodynamische Moment mit einer diskreten Hinterkantenklappe 709 zu erzeugen, wie es in Figur 7F veranschaulicht ist. Die Hinterkantenklappe 709 ist an einer drehbaren Achse 711 befestigt. Die Achse 711 wird mittels zweier Aktuatoren 707, die mit Schubstangen 708 mit der Achse 711 verbunden sind, gedreht, so dass die Hinterkantenklappe 709 nach oben oder unten bewegbar ist, wie es durch den Pfeil 712 angedeutet ist. Zur besseren Veranschaulichung der Funktionsweise sind in Figur 7F unterschiedliche Positionen der Hinterkantenklappe 709 gezeigt.

Die Änderung des Pitchwinkels mithilfe einer Profilveränderung oder mit einer Servoklappe ist ein energiesparendes Verfahren, um den Pitchwinkel des Rotorblattes bzw. zumindest eines Abschnittes des Rotorblattes zu verändern, weil ein wesentlicher Anteil der dafür erforderlichen Kräfte aerodynamisch erzeugt wird. Dieser Umstand erleichtert es den Pitchwinkel umlaufperiodisch oder höherharmonisch durchzuführen, weil die dafür erforderliche Energie geringer ist als bei herkömmlichen Pitchantrieben oder direkt wirkenden großen Auftriebsklappen.

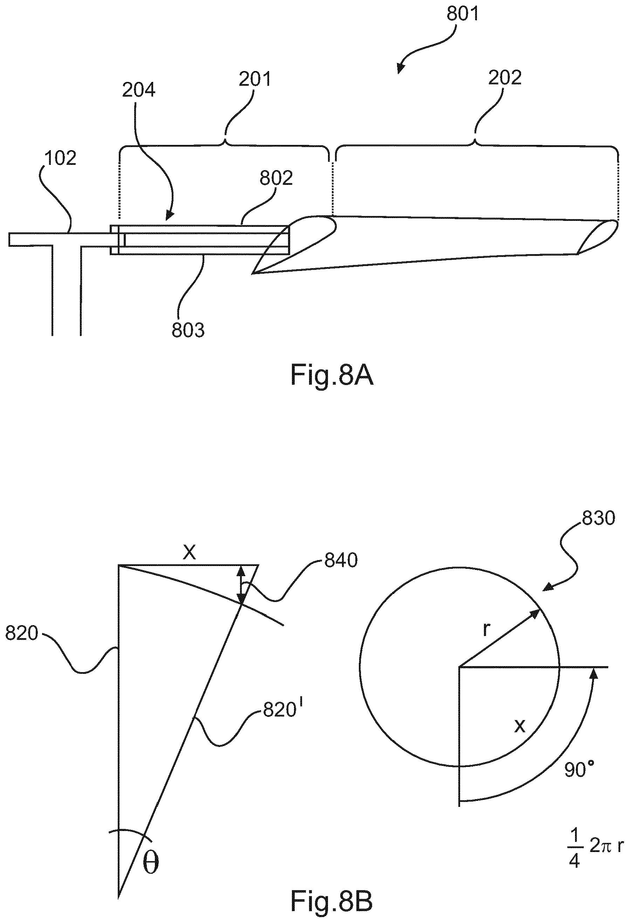

Figur 8A zeigt ein alternatives Ausführungsbeispiel eines erfindungsgemäßen Rotorblattes, das als Ganzes mit dem Bezugszeichen 801 bezeichnet ist. Bei dem Rotorblatt 801 ist das Drillelement 204 in dem nabennahen Abschnitt 201 aus zwei Längsstreben 802, 803 aufgebaut, die sich nach dem Elle-Speiche-Prinzip gegeneinander verdrehen können. Die Längsstreben 802 und 803 sind an ihrem nabenseitigen Ende an der Nabe 102 des Rotors und an ihrem nabenfernen Ende an dem äußeren Abschnitt 202 des Rotorblattes 801 befestigt. Zur besseren Veranschaulichung sind in Figur 8A die Längsstreben 802, 803 ohne Verkleidung dargestellt. In einer praktischen Ausführungsform sind die Längsstreben 802, 803 jedoch von einer gemeinsamen Verkleidung umgeben oder jeweils einzeln verkleidet, so dass in letzterem Fall das Drillelement 204 die Gestalt eines Doppeldeckerflügels annimmt. Ein in Figur 8A nicht dargestelltes Pitchrohr ermöglicht es den Pitchwinkel des äußeren Abschnittes 202 des Rotorflügels 801 zu verändern, indem die zwei nabenfernen Enden der Längsstreben 802, 803 gegeneinander verdreht werden.

Wie bei den in Figur 2A bzw. 5A dargestellten Rotorflügeln werden die auf das Rotorblatt ausgeübten Kräfte lagerlos von dem Rotorblatt 801 auf die Nabe 102 übertragen. Ein Unterschied zu den eingangs beschriebenen Ausführungsbeispielen besteht jedoch darin, dass das aus den Längsstreben 801,802 aufgebaute Drillelement 204 keine Energie speichert. Daher muss in einer Windenergieanlage, die mit einem Rotorblatt 801 ausgestattet ist, ein Energiespeicher vorgesehen sein, der den Pitchantrieb bei einem Stromausfall mit Energie versorgt, damit das Rotorblatt 801 in eine sichere Fahnenstellung zurückgedreht werden kann. Als Energiespeicher für diesen Zweck sind Akkumulatoren oder Kondensatoren geeignet. Natürlich ist das In Fig. 8A gezeigte Drillelement 204 auch ebenso zwischen dem Basisblatt 501 und der Blattspitze 502, wie beispielsweise in Fig. 5B gezeigt, einsetzbar.

Figur 8B zeigt schematisch die Verkürzung eines Elementes, bspw. eines Drillelementes 504, 506, in axialer Richtung durch Torsion. Ein Element einer bestimmten Länge 820 hat im untordierten Zustand bspw. eine Länge von 20 m. Bei Torsion um einen bestimmten Winkel verändert sich ein Abstand auf zwei entgegengesetzten Endstücken des Drillelementes entsprechend einer Bewegung entlang einer Kreisbahn, wie in der Skizze 830 schematisch dargestellt ist. So ist die Bewegung x über den Radius r des Drillelementes mit dem angelegten Drehwinkel verbunden. Über eine Drillwinkelautorität von 90 Grad, entsprechend einem Viertelkreis, lässt sich die, in der linken Skizze von Figur 8B gezeigte, horizontale Verschiebung x somit mittels der Kreisgleichung auf $\frac{1}{4} 2\pi \cdot r$ abschätzen. Das Verhältnis aus horizontaler Verlagerung x und Länge 820 führt auf den Drillwinkel θ, der entsprechend zwischen der unverdrillten Länge 820 und einer verdrillten Länge 820' wirkt. Die Verkürzung des Drillelementes entspricht dann einer Länge 840. Diese Abschätzung entspricht nur allgemein bekannter, geometrischer Zusammenhänge im Bereich von strukturmechanisch linearen Verdrillungen bei geometrischen Figuren, insb. Zylindern. Durch die Verkürzung 840 kann bspw. eine Lagerung oder eine Betätigung des Pitchrohres 208 derart ausgelegt werden, dass sowohl im entspannten, als auch im tordierten Zustand eine Kraftübertragung, bzw. ein Getriebeeingriff möglich ist.

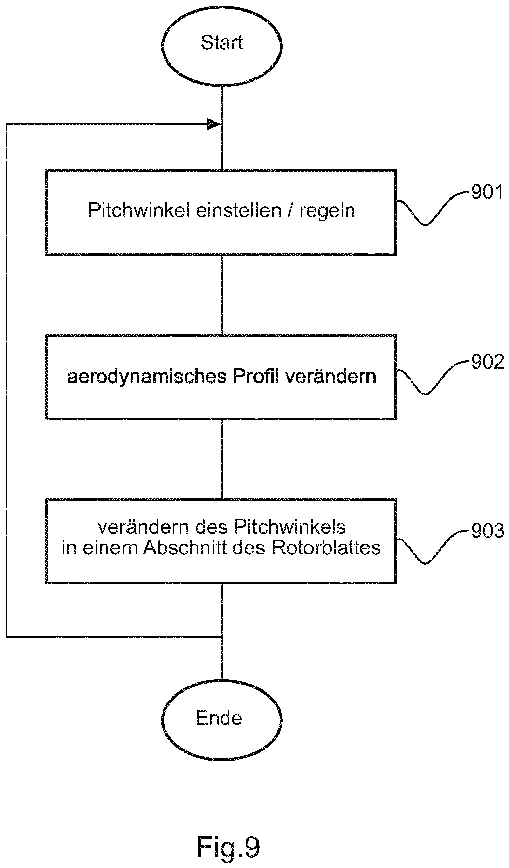

Schließlich zeigt Figur 9 ein Flussdiagramm für ein Verfahren zur Steuerung einer Windenergieanlage, die mit wenigstens einen erfindungsgemäßen Rotorblatt ausgerüstet ist. Eine Pitchregelung stellt den Pitchwinkel der Rotorblätter der Windenergieanlage ein (Schritt 901). Der Pitchwinkel wird dabei insbesondere für jedes Rotorblatt einzeln eingestellt. Grundsätzlich ist es aber auch möglich für alle Rotorblätter einen gemeinsamen Pitchwinkel einzustellen. In einem nächsten Schritt wird das aerodynamische Profil des Rotorblattes verändert (Schritt 902), um mit einem aerodynamisch erzeugten Moment den Anstellwinkel eines Abschnittes des Rotorblattes zusätzlich zu verändern (Schritt 903).

Da das Rotorblatt ohne Pitchlager auskommt und die Veränderung des Pitchwinkels energiesparend durchgeführt wird, ist es möglich, den Pitchwinkel umlaufperiodisch oder oder höherharmonisch oder nicht-harmonisch/stochastisch anzupassen und so die auf das Rotorblatt wirkende Grenzbelastung zu begrenzen.

In noch einem weiteren, in der Zeichnung nicht dargestellten Ausführungsbeispiel der Erfindung ist das Rotorblatt in einen nabennahen Abschnitt und einen Außenabschnitt geteilt, die mit einem tordierbaren Drillelement miteinander verbunden sind. Der nabennahe Abschnitt ist an der Blattwurzel konventionell über ein Pitchlager mit der Nabe verbunden. Das Rotorblatt weist weiterhin wenigstens einen Aktuator auf, mittels dessen die aerodynamischen Eigenschaften des Außenabschnittes gezielt veränderbar sind, indem der Aktuator beispielsweise das Profil des Außenabschnittes verändert oder eine Servoklappe an der Hinterkante des Rotorblattes betätigt. Sowohl die Änderung des aerodynamischen Profils des Außenabschnittes als auch das Verstellen der Servoklappe erzeugt ein aerodynamisches Moment, mittels dessen der Anstellwinkel des Außenabschnittes veränderbar ist. Durch diese Anordnung wird erreicht, dass der Außenabschnitt des Rotorblattes lagerfrei verschwenkbar ist, sodass umlaufperiodische oder höherharmonisch Anpassungen des Anstellwinkels vorgenommen werden können, ohne einen erhöhten Verschleiß der Pitchlager an der Blattwurzel zu verursachen. In welchem Verhältnis die Gesamtlänge des Rotorblattes auf den nabennahen Abschnitt und den Außenabschnitt aufgeteilt ist, kann an unterschiedliche Standorte oder Typen von Windenergieanlagen angepasst werden.

In den Ansprüchen schließen die Wörter "aufweisen" und "umfassen" andere Elemente oder Schritte nicht aus und der unbestimmte Artikel "ein" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind bedeutet nicht, dass nicht auch eine Kombination dieser Funktionen und Elemente vorteilhaft verwendet werden könnte.

**Patentansprüche**

1. Rotorblatt für eine Windenergieanlage mit Pitchregelung, wobei die Pitchregelung ausgebildet ist, einen Pitchwinkel des Rotorblattes bei Windgeschwindigkeiten oberhalb einer Nenngeschwindigkeit zu vergrößern, um das Rotorblatt aus dem Wind zu drehen und die Windenergieanlage auf einer Nennleistung und einer Nenndrehzahl zu halten, wobei das Rotorblatt einen nabennahen Abschnitt (201) und einen daran angesetzten Außenabschnitt (202) aufweist, wobei der nabennahe Abschnitt (201) eine Verbindungskomponente (406) mit einem Drillelement (204) umfasst, wobei das Drillelement (204) als eine zugfeste und biegesteife Verbindung zwischen Nabe (112) und Außenabschnitt (202) des Rotorblattes ausgebildet ist, dessen Enden relativ zueinander verdrehbar sind und jeweils eine zug- und drehfeste Verbindung am inneren Ende zur Nabe (112) der Windenergieanlage und am äußeren Ende zum Außenabschnitt (202) des Rotorblattes (108) herstellt, wobei das Drillelement (204) dazu eingerichtet ist, eine Drehung des Außenblattabschnittes (202) um die Rotorblattlängsachse lagerlos zu ermöglichen.

2. Rotorblatt nach Anspruch 1, **dadurch gekennzeichnet, dass** das Drillelement (204) ein Torsionselement (301) umfasst, wobei das Torsionselement (301) insbesondere ein wölbkrafttorsionsfreies, insbesondere offenes Querschnittsprofil aufweist.

3. Rotorblatt nach Anspruch 2, **dadurch gekennzeichnet, dass** das auf der Nabe (112) der Windenergieanlage montierte Rotorblatt (108) bei entspanntem Torsionselement (301) eine 90° ± 10° Pitchlage einnimmt.

4. Rotorblatt nach einem der Ansprüche 2 bis 3, **dadurch gekennzeichnet, dass** das Torsionselement (301) so dimensioniert ist, dass, wenn das auf der Nabe montierte Rotorblatt in den Wind gedreht ist, die in dem Torsionselement gespeicherte elastische Energie ausreicht, um das Rotorblatt (108) zu einer Fahnenstellung hin zu verstellen und aus dem Wind zu drehen.

5. Rotorblatt nach einem der Ansprüche 2 bis 4, **dadurch gekennzeichnet, dass** das Torsionselement (301) aus Metall und/oder einem Verbundwerkstoff hergestellt ist.

6. Rotorblatt nach Anspruch 1, **dadurch gekennzeichnet, dass** das Drillelement zwei Längsstreben (802, 803) aufweist, die gemäß dem Elle-Speiche-Prinzip gegeneinander verdrehbar sind.

7. Rotorblatt nach einem der vorstehenden Ansprüche, **dadurch gekennzeichnet, dass** das Drillelement (204) eine 0° ± 10° Pitchlage zulässt, wenn das Rotorblatt (108) auf einer Nabe (112) der Windenergieanlage montiert ist.

8. Rotorblatt nach einem der vorstehenden Ansprüche, wobei die Verbindungskomponente (406) weiter ein torsionssteifes Pitchrohr (208) umfasst, wobei das nabenseitige Ende des Pitchrohres (208) gegenüber dem nabenseitigen Ende des Drillelementes (204) um die Längsachse des Rotorblattes verdrehbar ist und das nabenferne Ende des Pitchrohres an dem nabenfernen Ende des Drillelements (204) drehfest angeordnet ist, wobei das Drillelement (204) insbesondere eine kleinere Torsionssteifigkeit aufweist als das Pitchrohr (208).

9. Rotorblatt nach Anspruch 8, **dadurch gekennzeichnet, dass** ein Befestigungsabschnitt (411) an dem nabenfernen Ende des Drillelementes (204) mit dem Pitchrohr (208) drehfest verbunden ist, während das Drillelement im Übrigen in dem Pitchrohr verdrehbar gelagert ist.

10. Rotorblatt nach einem der Ansprüche 8 bis 9, **dadurch gekennzeichnet, dass** das nabenseitige Ende des Pitchrohres (208) einen kreisförmigen Querschnitt aufweist, wobei das nabenseitige Ende des Pitchrohres (208) insbesondere mit einem Zahnkranz (409, 416) versehen ist, wobei der Zahnkranz (409, 416) vorzugsweise von einer Verkürzung des Drillelementes (204) durch Torsion unabhängig ausgelegt ist.

11. Rotorblatt nach einem der Ansprüche 8 bis 10, **dadurch gekennzeichnet, dass** das nabenferne Ende des Pitchrohres (208) einen ovalen Querschnitt aufweist, der an den Querschnitt des nabenseitigen Endes des Außenabschnittes (202) angepasst ist.

12. Rotorblatt nach einem der vorstehenden Ansprüche, **dadurch gekennzeichnet, dass** der Außenabschnitt eine einteilig oder mehrteilig ausgebildete Servoklappe (509) aufweist, wobei in dem Außenabschnitt (202) insbesondere wenigstens ein Aktuator (702) vorgesehen ist, mittels dessen eine aerodynamische Eigenschaft, insbesondere das Profil, wenigstens eines Teils des Außenblattes veränderbar ist.

13. Rotorblatt nach einem der vorstehenden Ansprüche, **dadurch gekennzeichnet, dass** der Außenabschnitt (202) in ein Basisblatt (501) und eine Blattspitze (502) geteilt ist, die über ein weiteres Drillelement (503) miteinander verbunden sind.

14. Windenergieanlage mit Pitchregelung, **dadurch gekennzeichnet, dass** die Windenergieanlage einen aerodynamischen Rotor (106) mit wenigstens einem Rotorblatt (108) nach einem der vorstehenden Ansprüche umfasst, wobei die Pitchregelung ausgebildet ist, einen Pitchwinkel des Rotorblattes (108) bei Windgeschwindigkeiten oberhalb einer Nenngeschwindigkeit zu vergrößern, um das Rotorblatt (108) aus dem Wind zu drehen und die Windenergieanlage auf einer Nennleistung und einer Nenndrehzahl zu halten.

15. Verfahren zum Steuern einer Windenergieanlage nach Anspruch 14, wobei das Verfahren ein umlaufperiodisches oder mehrfach pro Umlauf erfolgendes Verändern (902) eines aerodynamischen Profils in einem Bereich des Rotorblattes und/oder eines Pitchwinkels des Rotorblattes umfasst.

## Claims

1. Rotor blade for a wind turbine having pitch control, wherein the pitch control is constructed to increase a pitch angle of the rotor blade at wind speeds above a nominal speed in order to rotate the rotor blade out of the wind and to keep the wind turbine at a nominal power and a nominal speed, wherein the rotor blade has a portion (201) close to the hub and an outer portion (202) which is attached thereto, wherein the portion (201) close to the hub comprises a connection component (406) having a twisting element (204), wherein the twisting element (204) is constructed as a tension-resistant and bending-resistant connection, between the hub (112) and outer portion (202) of the rotor blade, whose ends can be rotated relative to each other and which in each case produces a tension-resistant and rotationally secure connection at the inner end to the hub (112) of the wind turbine and at the outer end to the outer portion (202) of the rotor blade (108), wherein the twisting element (204) is configured to enable a rotation of the outer blade portion (202) about the rotor blade longitudinal axis without any bearing.

2. Rotor blade according to claim 1, **characterised in that** the twisting element (204) comprises a torsion element (301), wherein the torsion element (301) has in particular a deflection force torsion-free, in particular open, cross-sectional profile.

3. Rotor blade according to claim 2, **characterised in that** the rotor blade (108) which is mounted on the hub (112) of the wind turbine assumes a 90° ± 10° pitch position with the torsion element (301) in an untensioned state.

4. Rotor blade according to any one of claims 2 to 3, **characterised in that** the torsion element (301) is sized in such a manner that, when the rotor blade which is mounted on the hub is rotated into the wind, the resilient energy stored in the torsion element is sufficient to move the rotor blade (108) to a feathered pitch and to rotate it out of the wind.

5. Rotor blade according to any one of claims 2 to 4, **characterised in that** the torsion element (301) is produced from metal and/or a composite material.

6. Rotor blade according to claim 1, **characterised in that** the twisting element has two longitudinal struts (802, 803) which can be rotated with respect to each other in accordance with the radio-ulnar principle.

7. Rotor blade according to any one of the preceding claims, **characterised in that** the twisting element (204) permits a 0° ± 10° pitch position when the rotor blade (108) is mounted on a hub (112) of the wind turbine.

8. Rotor blade according to any one of the preceding claims, wherein the connection component (406) further comprises a torsion-resistant pitch pipe (208), wherein the hub-side end of the pitch pipe (208) can be rotated with respect to the hub-side end of the twisting element (204) about the longitudinal axis of the rotor blade and the end of the pitch pipe remote from the hub is arranged in a rotationally secure manner at the end of the twisting element (204) remote from the hub, wherein the twisting element (204) in particular has a smaller torsion resistance than the pitch pipe (208).

9. Rotor blade according to claim 8, **characterised in that** a securing portion (411) is connected to the pitch pipe (208) in a rotationally secure manner at the end of the twisting element (204) remote from the hub, whilst the twisting element is further rotatably supported in the pitch pipe.

10. Rotor blade according to any one of claims 8 to 9, **characterised in that** the hub-side end of the pitch pipe (208) has a circular cross-section, wherein the hub-side end of the pitch pipe (208) is provided in particular with a toothed ring (409, 416), wherein the toothed ring (409, 416) is preferably configured independently of a shortening of the twisting element (204) by means of torsion.

11. Rotor blade according to any one of claims 8 to 10, **characterised in that** the end of the pitch pipe (208) remote from the hub has an oval cross-section which is adapted to the cross-section of the hub-side end of the outer portion (202) .

12. Rotor blade according to any one of the preceding claims, **characterised in that** the outer portion has a servo valve (509) which is constructed in one part or several parts, wherein there is provided in the outer portion (202) in particular at least one actuator (702) by means of which an aerodynamic property, in particular the profile, of at least one portion of the outer blade can be changed.

13. Rotor blade according to any one of the preceding claims, **characterised in that** the outer portion (202) is divided into a base blade (501) and a blade tip (502) which are connected to each other by means of an additional twisting element (503).

14. Wind turbine with pitch control, **characterised in that** the wind turbine comprises an aerodynamic rotor (106) having at least one rotor blade (108) according to any one of the preceding claims, wherein the pitch control is constructed to increase a pitch angle of the rotor blade (108) at wind speeds above a nominal speed in order to rotate the rotor blade (108) out of the wind and to keep the wind turbine at a nominal power and a nominal speed.

15. Method for controlling a wind turbine according to claim 14, wherein the method involves changing (902) an aerodynamic profile in a region of the rotor blade and/or a pitch angle of the rotor blade periodically per revolution or several times per revolution.

**Revendications**

1. Pale de rotor pour une éolienne avec régulation de calage, dans laquelle la régulation de calage est réalisée afin d'augmenter un angle de calage de la pale de rotor en cas de vitesses de vent supérieures à une vitesse nominale afin de faire tourner la pale de rotor hors du vent et de maintenir l'éolienne à une puissance nominale et une vitesse de rotation nominale, dans laquelle la pale de rotor présente une section (201) proche du moyeu et une section extérieure (202) placée dessus, dans laquelle la section (201) proche du moyeu comporte un composant de liaison (406) avec un élément de torsion (204), dans laquelle l'élément de torsion (204) est réalisé comme une liaison résistante à la traction et rigide en flexion entre le moyeu (112) et la section extérieure (202) de la pale de rotor, dont les extrémités sont rotatives l'une par rapport à l'autre et établit respectivement une liaison résistante à la traction et à la rotation au niveau de l'extrémité intérieure avec le moyeu (112) de l'éolienne et au niveau de l'extrémité extérieure avec la section extérieure (202) de la pale de rotor (108), dans laquelle l'élément de torsion (204) est conçu afin de permettre sans palier une rotation de la section de pale extérieure (202) autour de l'axe longitudinal de pale de rotor.

2. Pale de rotor selon la revendication 1, **caractérisée en ce que** l'élément de torsion (204) comporte un élément à torsion (301), dans laquelle l'élément à torsion (301) présente en particulier un profil de section transversale sans torsion de force de courbure, en particulier ouvert.

3. Pale de rotor selon la revendication 2, **caractérisée en ce que** la pale de rotor (108) montée sur le moyeu (112) de l'éolienne occupe, en cas d'élément à torsion (301) détendu, une position de calage à 90° ± 10°.

4. Pale de rotor selon l'une quelconque des revendications 2 à 3, **caractérisée en ce que** l'élément à torsion (301) est dimensionné de sorte que, lorsque la pale de rotor montée sur le moyeu est tournée dans le vent, l'énergie élastique stockée dans l'élément de torsion suffit afin de régler la pale de rotor (108) vers une position de mise en drapeau et la faire tourner hors du vent.

5. Pale de rotor selon l'une quelconque des revendications 2 à 4, **caractérisée en ce que** l'élément à torsion (301) est fabriqué en métal et/ou en un matériau composite.

6. Pale de rotor selon la revendication 1, **caractérisée en ce que** l'élément de torsion présente deux entretoises longitudinales (802, 803) qui sont rotatives selon le principe radius-cubitus l'une par rapport à l'autre.

7. Pale de rotor selon l'une quelconque des revendications précédentes, **caractérisée en ce que** l'élément de torsion (204) autorise une position de calage de 0° ± 10° lorsque la pale de rotor (108) est montée sur un moyeu (112) de l'éolienne.

8. Pale de rotor selon l'une quelconque des revendications précédentes, dans laquelle le composant de liaison (406) comporte en outre un tube de calage (208) rigide en torsion, dans laquelle l'extrémité côté moyeu du tube de calage (208) est rotative par rapport à l'extrémité côté moyeu de l'élément de torsion (204) autour de l'axe longitudinal de la pale de rotor et l'extrémité éloignée du moyeu du tube de calage est agencée de manière résistante à la rotation au niveau de l'extrémité éloignée du moyeu de l'élément de torsion (204), dans laquelle l'élément de torsion (204) présente en particulier une rigidité à la torsion inférieure à celle du tube de calage (208).

9. Pale de rotor selon la revendication 8, **caractérisée en ce qu'**une section de fixation (411) est reliée de manière résistante à la rotation au niveau de l'extrémité éloignée du moyeu de l'élément de torsion (204) au tube de calage (208) alors que l'élément de torsion est logé de manière rotative par ailleurs dans le tube de calage.

**10.** Pale de rotor selon l'une quelconque des revendications 8 à 9, **caractérisée en ce que** l'extrémité côté moyeu du tube de calage (208) présente une section transversale circulaire, dans laquelle l'extrémité côté moyeu du tube de calage (208) est pourvue en particulier d'une couronne dentée (409, 416), dans laquelle la couronne dentée (409, 416) est de préférence conçue indépendamment d'un raccourcissement de l'élément de torsion (204) par torsion.

**11.** Pale de rotor selon l'une quelconque des revendications 8 à 10, **caractérisée en ce que** l'extrémité éloignée du moyeu du tube de calage (208) présente une section transversale ovale qui est adaptée à la section transversale de l'extrémité côté moyeu de la section extérieure (202).

**12.** Pale de rotor selon l'une quelconque des revendications précédentes, **caractérisée en ce que** la section extérieure présente un servo-volet (509) réalisé d'un seul tenant ou en plusieurs parties, dans laquelle en particulier au moins un actionneur (702) est prévu dans la section extérieure (202), au moyen duquel une propriété aérodynamique, en particulier le profil, au moins d'une partie de la pale extérieure peut être modifiée.

**13.** Pale de rotor selon l'une quelconque des revendications précédentes, **caractérisée en ce que** la section extérieure (202) est divisée en une pale de base (501) et une pointe de pale (502) qui sont reliées entre elles par le biais d'un autre élément de torsion (503).

**14.** Eolienne avec régulation de calage, **caractérisée en ce que** l'éolienne comporte un rotor aérodynamique (106) avec au moins une pale de rotor (108) selon l'une quelconque des revendications précédentes, dans laquelle la régulation de calage est réalisée afin d'agrandir un angle de calage de la pale de rotor (108) en cas de vitesses de vent supérieures à une vitesse nominale afin de faire tourner la pale de rotor (108) à partir du vent et de maintenir l'éolienne à une puissance nominale et une vitesse de rotation nominale.

**15.** Procédé de commande d'une éolienne selon la revendication 14, dans lequel le procédé comporte une modification (902) périodique en rotation ou s'effectuant plusieurs fois par rotation d'un profil aérodynamique dans une zone de la pale de rotor et/ou d'un angle de calage de la pale de rotor.

Fig. 1

Fig. 2A

Fig. 2B

Fig. 2C

EP 3 698 041 B1

A - A

302
301
303
304
306
303
208

Fig. 3A
302

B - B

302
208
303
303
302

Fig. 3B

A - A

302
301
302
303
303
304
208
302

Fig. 3C

B - B

301
208
302

302
Fig. 3D

A - A

301
303
302
206
302
302
208
302

Fig. 3E

Fig.4A

Fig.4B

Fig.4C

Fig.5A

Fig.5B

Fig.5C

108

601

506

602

602

Fig.6A

C - C

602

602

Fig.6B

D - D

Fig.6C

603

602

±10°

602

603

604

Fig.6D

701

704

703

702

704$^I$

## Fig.7A

$M_{aer}$

F

## Fig.7B

$M_{aer}$

F

## Fig.7C

701

707

703

708

707

706

## Fig.7D

701

703

## Fig.7E

707

708

709

701

707

708

712

## Fig.7F

Fig.8A

Fig.8B

```
        ┌─────────┐
        │  Start  │
        └─────────┘
             │
             ▼
   ┌──────────────────────────┐
   │ Pitchwinkel einstellen / regeln │ ── 901
   └──────────────────────────┘
             │
   ┌──────────────────────────┐
   │ aerodynamisches Profil verändern │ ── 902
   └──────────────────────────┘
             │
   ┌──────────────────────────┐
   │   verändern des Pitchwinkels    │ ── 903
   │ in einem Abschnitt des Rotorblattes │
   └──────────────────────────┘
             │
        ┌─────────┐
        │   Ende  │
        └─────────┘
```

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009317253 A1

- DE 102007013289 A1